(19) Europäisches Patentamt
European Patent Office
Office européen des brevets

(11) EP 3 237 464 B1

(12) **EUROPÄISCHE PATENTSCHRIFT**

(45) Veröffentlichungstag und Bekanntmachung des Hinweises auf die Patenterteilung:
**11.11.2020 Patentblatt 2020/46**

(21) Anmeldenummer: **15817320.3**

(22) Anmeldetag: **21.12.2015**

(51) Int Cl.:
***C08F 8/30*** (2006.01) ***B01J 41/13*** (2017.01)
***B01J 45/00*** (2006.01) ***C08F 8/12*** (2006.01)

(86) Internationale Anmeldenummer:
**PCT/EP2015/080826**

(87) Internationale Veröffentlichungsnummer:
**WO 2016/102487 (30.06.2016 Gazette 2016/26)**

(54) **VERFAHREN ZUR HERSTELLUNG VON AMINOMETHYLIERTEN PERLPOLYMERISATEN AUS N-CARBONSÄUREMETHYLPHTHALIMIDESTERN**

METHOD FOR THE PREPARATION OF AMINOMETHYLATED BEAD POLYMERS FROM N-CARBOXYLIC ACID METHYLPHTHALIMIDE ESTERS

PROCÉDÉ DE FABRICATION DE POLYMÈRES EN PERLES AMINOMÉTHYLÉS À PARTIR D'ESTERS MÉTHYL-PHTHALIMIDES D'ACIDES CARBOXYLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2014 EP 14199636**

(43) Veröffentlichungstag der Anmeldung:
**01.11.2017 Patentblatt 2017/44**

(73) Patentinhaber: **LANXESS Deutschland GmbH**
**50569 Köln (DE)**

(72) Erfinder:
- **KLIPPER, Reinhold**
  **50933 Köln (DE)**
- **VANHOORNE, Pierre**
  **40789 Monheim (DE)**
- **KOOP, Bernd**
  **50668 Köln (DE)**
- **REZKALLAH, Areski**
  **51427 Bergisch Gladbach (DE)**

(56) Entgegenhaltungen:
**US-A- 3 989 650**
**US-A- 4 952 608**
**US-A1- 2006 199 892**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von aminomethylierten Perlpolymerisaten aus N-Carbonsäuremethylphthalimidestern, die als Anionenaustauscher verwendet werden oder zu Chelatharzen weiter umgesetzt werden können.

Aus der DE-A 3733033, der US-B 7053129 oder der US-A 3925264 ist ein Verfahren zur Herstellung von aminomethylierten Perlpolymerisaten bekannt, bei dem Phthalimid in Gegenwart von Formaldehyd und in Gegenwart von Basen und Quellungsmitteln, insbesondere in 1,2-Dichlorethan, in N-Hydroxymethylphthalimid überführt wird, welches in einem weiteren Schritt säurekatalytisch zum Bis(phthalimidomethyl)ether umgesetzt wird. Dieser Ether wird in Gegenwart von Friedel-Crafts Katalysatoren, insbesondere in Gegenwart von starken Säuren, mit dem Perlpolymerisat zum phthalimidomethylierten Perlpolymerisat umgesetzt. Das phthalimidomethylierte Perlpolymerisate wird dann alkalisch zum aminomethylierten Perlpolymerisat hydrolysiert.

Aus der US 3989650 ist ein Verfahren zur Herstellung von aminomethylierten Perlpolymerisaten bekannt, bei dem N-Hydroxyalkylimide oder N-Hydroxyalkylamide mit aliphatischen Carbonsäuren und Carbonsäurenanhydriden zu deren Estern umgesetzt werden und dann das Perlpolymerisat in Gegenwart eines Quellungsmittels und eines Friedel-Crafts Katalysators amidomethyliert wird. Das amidomethylierte Perlpolymerisat wird dann alkalisch zum aminomethylierten Perlpolymerisat hydrolysiert.

US-A 2006/199892 beschreibt die Umsetzung von N-Acetoxymethylphthalimid mit einem Perlpolymerisat in Gegenwart von 1,2-Dichlorethan.

Nachteilig an den vorgenannten Verfahren ist, dass die Ausbeuten nicht zufriedenstellend sind.

Es bestand daher ein Bedürfnis nach einem Verfahren, bei dem unter hohen Ausbeuten aminomethylierte Perlpolymerisate hergestellt werden können.

Überraschend wurde gefunden, dass in Gegenwart von aliphatischen, gesättigten oder ungesättigten Carbonsäureanhydriden oder Carbonsäuren oder in Gegenwart von Gemischen dieser Carbonsäureanhydride und zumindest einer aliphatischen, gesättigten oder ungesättigten Carbonsäure, hohe Ausbeuten an aminomethylierten Perlpolymerisaten erzielt werden können. Dabei kann weitestgehend auf den Einsatz chlorierter organischer Lösungsmittel verzichtet werden.

Gegenstand der Erfindung ist daher ein Verfahren zur Herstellung von aminomethylierten Perlpolymerisaten, bei dem,

a) Monomertröpfchen aus einem Gemisch enthaltend mindestens eine monovinylaromatische Verbindung, mindestens eine polyvinylaromatische Verbindung, mindestens einen Initiator zu einem Perlpolymerisat umgesetzt werden und

b) das Perlpolymerisat aus Schritt a) mit N-Carbonsäuremethylphthalimidester
in Gegenwart von aliphatischen, gesättigten oder ungesättigten Carbonsäureanhydriden oder Carbonsäuren oder in Gegenwart von Gemischen von aliphatischen, gesättigten oder ungesättigten Carbonsäureanhydride und zumindest einer aliphatischen, gesättigten oder ungesättigten Carbonsäure und
in Abwesenheit von 1,2-Dichlorethan und
in Gegenwart von zumindest einem Friedel-Crafts Katalysator
zu einem phthalimidomethyliertem Perlpolymerisat umgesetzt wird und die Menge der eingesetzten Verbindungen:

N-Carbonsäuremethylphthalimidester, Perlpolymerisat, aliphatischen, gesättigten oder ungesättigten Carbonsäureanhydride oder Carbonsäuren und Friedel-Crafts Katalysatoren

zusammen in der Reaktionsmischung größer sind als 80 Gew.-% bezogen auf die Gesamtmenge der Reaktionsmischung und

c) das pththalimidomethylierte Perlpolymerisat zu einem aminomethylierten Perlpolymerisat hydrolysiert wird.

Der Rahmen der Erfindung umfasst alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Kombination.

In Verfahrensschritt a) wird wenigstens eine monovinylaromatische Verbindung und wenigstens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.

Als monovinylaromatische Verbindungen im Sinne der vorliegenden Erfindung werden in Verfahrensschritt a) bevorzugt Styrol, Vinyltoluol, Ethylstyrol, $\alpha$-Methylstyrol, Chlorstyrol, oder Chlormethylstyrol eingesetzt.

Insbesondere bevorzugt wird Styrol oder Mischungen aus Styrol mit den vorgenannten Monomeren, bevorzugt mit Ethylstyrol, eingesetzt.

Bevorzugte polyvinylaromatische Verbindungen im Sinne der vorliegenden Erfindung sind für Verfahrensschritt a) Divinylbenzol, Divinyltoluol, Trivinylbenzol, Divinylnaphtalin, oder Trivinylnaphtalin, insbesondere bevorzugt Divinylbenzol.

Die polyvinylaromatischen Verbindungen werden bevorzugt in Mengen von 1-20 Gew.-%, besonders bevorzugt 2-12 Gew.-%, insbesondere bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Perlpolymerisats ausgewählt. Im Falle des Einsatzes von Divinylbenzol sind kommerzielle Divinylbenzolqualitäten, die neben den Isomeren des Divinylbenzols auch Ethylvinylbenzol enthalten, ausreichend.

Der Begriff Perlpolymerisat stellt im Sinne der Erfindung ein kugelförmiges, vernetztes Polymerisat dar.

Die Begriffe mikroporös oder gelförmig bzw. makroporös sind in der Fachliteratur bereits eingehend beschrieben worden.

Die Ausbildung makroporöser Perlpolymerisate erfolgt vorzugsweise durch Zusatz von Inertmaterialien, bevorzugt wenigstens eines Porogens, zu der Monomermischung bei der Polymerisation, um im Perlpolymerisat eine makroporöse Struktur zu erzeugen. Insbesonders bevorzugte Porogene sind Hexan, Octan, Isooctan, Isododecan, Methylethylketon, Butanol oder Octanol und deren Isomeren. Es sind vor allem organische Substanzen geeignet, die sich im Monomeren lösen, das Perlpolymerisat aber schlecht lösen bzw. quellen (Fällmittel für Polymere) beispielsweise aliphatische Kohlenwasserstoffe (Farbenfabriken Bayer DBP 1045102 , 1957; DBP 1113570, 1957).

In US 4382124 werden als Porogen die ebenfalls im Rahmen der vorliegenden Erfindung bevorzugt einzusetzende Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Bevorzugt wird in Verfahrensschritt a) mindestens ein Porogen zugesetzt. Bevorzugt weisen die aminomethylierten Perlpolymerisate eine makroporöse Struktur auf.

Die gemäß Verfahrensschritt a) hergestellten Perlpolymerisate können in heterodisperser oder monodisperser Form hergestellt werden.

Die Herstellung heterodisperser Perlpolymerisate geschieht nach allgemeinen, dem Fachmann bekannten Verfahren, z.B. mit Hilfe der Suspensionspolymerisation.

Bevorzugt werden monodisperse Perlpolymerisate in Verfahrensschritt a) hergestellt.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von +/- 10 % des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

In einer bevorzugten Ausführungsform der vorliegenden Erfindung kommen in Verfahrensschritt a) mikroverkapselte Monomertröpfchen bei der Herstellung von monodispersen Perlpolymerisaten zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Bevorzugt ist die Phasengrenzflächenkondensation, bei der eine im Monomertröpfchen gelöste Reaktivkomponente (insbesondere ein Isocyanat oder ein Säurechlorid) mit einer zweiten, in der wässrigen Phase gelösten Reaktivkomponente (insbesondere einem Amin), zur Reaktion gebracht wird.

Die heterodispersen oder gegebenenfalls mikroverkapselten, monodispersen Monomertröpfchen enthalten wenigstens einen Initiator oder Mischungen von Initiatoren (Initiatorkombination) zur Auslösung der Polymerisation. Für das erfindungsgemäße Verfahren bevorzugte Initiatoren sind Peroxyverbindungen, insbesondere bevorzugt Dibenzoylperoxid, Dilauroylperoxid, Bis(p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-etylhexan, sowie Azoverbindungen wie 2,2'-Azobis(isobutyronitril) oder 2,2'-Azobis(2-methylisobutyronitril).

Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Das gegebenenfalls, monodisperse, mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Bei der Herstellung von monodispersen Perlpolymerisaten in Verfahrensschritt a) kann die wässrige Phase in einer weiteren bevorzugten Ausführungsform einen gelösten Polymerisationsinhibitor enthalten. Als Inhibitoren kommen in diesem Fall sowohl anorganische als auch organische Stoffe in Frage. Bevorzugte anorganische Inhibitoren sind Stickstoffverbindungen, insbesondere bevorzugt Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere bevorzugte organische Inhibitoren sind stickstoffhaltige Verbindungen. Insbesondere bevorzugt sind Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazino-diessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm.

Die Polymerisation der gegebenenfalls mikroverkapselten monodispersen, Monomertröpfchen zum monodispersen Perlpolymerisat erfolgt, wie bereits oben erwähnt, gegebenenfalls bzw. bevorzugt in Anwesenheit eines oder mehrerer Schutzkolloide in der wässrigen Phase. Als Schutzkolloide eignen sich natürliche oder synthetische wasserlösliche Polymere, bevorzugt Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Bevorzugt sind ferner Cellulosederivate, insbesondere Celluloseester und Celluloseether, wie Carboxymethylcellulose Methylhydroxyethylcellulose, Methylhydroxypropylcellulose und Hydroxyethylcellulose. Insbesondere bevorzugt ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum monodispersen Perlpolymerisat kann in einer alternativen bevorzugten Ausführungsform in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt beispielsweise 0,5 - 500 mmol/l und vorzugsweise 2,5 - 100 mmol/l.

Die Rührgeschwindigkeit bei der Polymerisation zum monodispersen Perlpolymerisat ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt im Allgemeinen 1 : 0,75 bis 1 : 20, vorzugsweise 1 : 1 bis 1 : 6.

Die Polymerisationstemperatur zum monodispersen Perlpolymerisat richtet sich nach der Zerfallstemperatur des eingesetzten Initiators. Sie liegt im Allgemeinen zwischen 50 bis 180°C, vorzugsweise zwischen 55 und 130°C. Die Polymerisation dauert im Allgemeinen 0,5 bis etwa 20 Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das monodisperse Perlpolymerisat mit üblichen Methoden, beispielsweise durch Filtrieren oder Dekantieren, isoliert und gegebenenfalls gewaschen.

Die Herstellung der monodispersen Perlpolymerisate mit Hilfe des Jetting Prinzipes oder des Seed-Feed-Prinzip ist aus dem Stand der Technik bekannt und z.B. in US-A 4 444 961, EP-A 0 046 535, US 4 419 245 oder WO 93/12167 beschrieben.

Bevorzugt erfolgt die Herstellung der monodispersen Perlpolymerisate mit Hilfe des Jetting Prinzipes oder des Seed-Feed-Prinzip.

Bevorzugt wird in Verfahrensschritt a) ein makroporöses, monodisperses Perlpolymerisat hergestellt.

Als Carbonsäurenanhydride können in Verfahrensschritt b) z.B. und vorzugsweise aliphatische, gesättigte oder ungesättigte Mono- , Di- oder Tricarbonsäureanhydride, die bei Temperaturen zwischen 10 °C und 60 °C flüssig sind,

wie z.B. Bernsteinsäureanhydrid, Oxalsäureanhydrid, Adipinsäureanhydrid, Maleinsäureanhydrid, Essigsäuresäureanhydrid, Buttersäureanhydrid, Propionsäureanhydrid, Hexansäureanhydrid oder Pentansäureanhydrid und deren Isomere, wie z.B. Valeriansäureanhydrid, Isovaleriansäureanhydrid, 2-Methylbuttersäureanhydrid oder Pivalinsäureanhydrid eingesetzt werden. Besonders bevorzugt werden in Verfahrensschritt b) als Carbonsäureanhydride aliphatische und gesättigte Monocarbonsäureanhydride eingesetzt, die bei Temperaturen zwischen 10 °C und 60 °C flüssig sind. Ganz besonders bevorzugt werden Essigsäureanhydrid oder Pentansäureanhydrid und deren Isomere Valeriansäureanhydrid, Isovaleriansäureanhydrid, 2-Methylbuttersäureanhydrid oder Pivalinsäureanhydrid eingesetzt. Noch weiter bevorzugt wird Essigsäureanhydrid eingesetzt.

Als Carbonsäuren können in Verfahrensschritt b) z.B. und vorzugsweise flüssige, gesättigte oder ungesättigte Mono- , Di- oder Tricarbonsäuren, die bei Temperaturen zwischen 10 °C und 60 °C flüssig sind, wie z.B. Bernsteinsäure, Oxalsäure, Adipinsäure, Ameisensäuren, Diglykolsäure, Maleinsäure, Essigsäure, Buttersäure, Propansäure, Hexansäure oder Heptansäure eingesetzt werden. Bevorzugt werden Carbonsäuren oder Gemische aus Carbonsäureanhydride und der korrespondierenden Carbonsäuren d.h. z.B. Valeriansäureanhydrid mit Valeriansäure oder Essigsäureanhydrid mit Essigsäure eingesetzt. Besonders bevorzugt werden als Carbonsäuren in Verfahrensschritt b) aliphatische und gesättigte Monocarbonsäuren eingesetzt, die bei Temperaturen zwischen 10 °C und 60 °C flüssig sind. Ganz besonders bevorzugt wird Essigsäure oder Essigsäureanhydrid mit Essigsäure als Gemisch eingesetzt. Falls Gemische aus Carbonsäureanhydrid und Carbonsäure eingesetzt werden, liegt das Mengenverhältnis Carbonsäureanhydrid zu Carbonsäure im Allgemeinen zwischen 100 : 1 bis 1 : 100. Bevorzugt liegt das Mengenverhältnis zwischen Carbonsäureanhydrid zu Carbonsäure zwischen 100 : 1 bis 1 : 1. Besonders bevorzugt liegt das Mengenverhältnis zwischen Carbonsäureanhydrid zu Carbonsäure zwischen 10 : 1 und 1 : 10. Noch weiter bevorzugt liegt das Mengenverhältnis zwischen Carbonsäureanhydrid zu Carbonsäure zwischen 10 : 1 und 3 : 1.

Als Friedel-Crafts Katalysator können in Verfahrensschritt b) vorzugsweise starke anorganische oder organische Protonensäuren oder Lewis-Säuren wie z.B. Zinkchlorid, Aluminiumchlorid, Zinntetrachlorid, Eisen(III)chlorid oder weitere Eisen(III)salze oder Gemische dieser Verbindungen eingesetzt werden. Als Friedel-Crafts Katalysator werden beispielsweise und vorzugsweise aliphatische oder aromatische Methan-, Benzol,- und Toluolsulfonsäuren, Salzsäure, Schwefelsäure, Oleum, Salpetersäure oder Phosphorsäure oder Gemische dieser Säuren eingesetzt. Als organische Protonensäuren können z.B. aliphatische oder aromatische Methan-, Benzol,- und Toluolsulfonsäuren oder Fluorsulfonsäure eingesetzt werden. Bevorzugt werden als Friedel-Crafts Katalysatoren Schwefelsäure, Oleum und Eisen(III)salze oder Gemische dieser Verbindungen eingesetzt. Besonders bevorzugt wird als Friedel-Crafts Katalysator Schwefelsäure und Eisen(III)chlorid und Gemische dieser Verbindungen eingesetzt.

Bevorzugt wird die Schwefelsäure zu den Eisen(III)salzen in Verfahrensschritt b) in einem Molverhältnis von 3 : 1 bis 1 : 3 eingesetzt. Besonders bevorzugt wird die Schwefelsäure zu Eisen(III)chlorid in Verfahrensschritt b) in einem Molverhältnis von 1 : 1 bis 1 : 3 eingesetzt.

Als N-Carbonsäuremethylphthalimidester können in Verfahrensschritt b) alle Ester eingesetzt werden, die bei der Veresterung von N-Hydroxymethylphthalimid mit aliphatischen, gesättigten oder ungesättigten Carbonsäureanhydriden oder aliphatischen, gesättigten oder ungesättigten Carbonsäuren und den Gemischen aus aliphatischen, gesättigten oder ungesättigten Carbonsäureanhydriden und aliphatischen, gesättigten oder ungesättigten Carbonsäuren entstehen können. N-Carbonsäuremethylphthalimidester stellen bevorzugt Verbindungen der Formel (I) dar

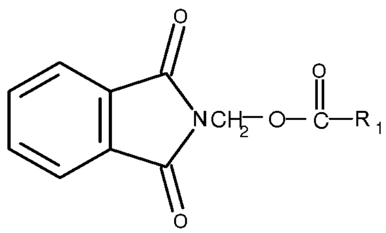

(I)

wobei $R_1$ für lineare oder verzweigte $C_1$-$C_6$-Alkyl und $C_2$-$C_5$-Alkenylreste steht, die gegebenenfalls durch weitere Carboxylgruppen substituiert sein können. Bevorzugt steht $R_1$ für lineares oder verzweigtes $C_1$-$C_6$-Alkyl.

Besonders bevorzugt können als N-Carbonsäuremethylphthalimidester, N-Acetoxy-methylphthalimid, N-Propionox-y-methylphthalimid und Butyroxy-N-methylphthalimid eingesetzt werden. Ganz besonders bevorzugt wird als N-Carbonsäuremethylphthalimidester N-Acetoxy-methylphthalimid eingesetzt. Die Herstellung der N-Carbonsäuremethylphthalimidester ist zudem z.B. aus der US 3,989,650 bekannt. N-Hydroxymethylphthalimid kann beispielsweise und vorzugsweise durch Umsetzung von Phthalimid mit Formaldehyd in Gegenwart von Basen hergestellt werden und kann dann in Gegenwart von Carbonsäureanhydriden oder/und Carbonsäuren, gegebenenfalls in Anwesenheit weiterer anorganischer oder organischer katalytisch wirkender Protonensäure, zum N-Carbonsäuremethylphthalimidester verestert werden.

Der N-Carbonsäuremethylphthalimidester kann beispielsweise zunächst aus N-Hydroxymethylphthalimid und Carbonsäureanhydrid oder Carbonsäuren oder Gemischen aus Carbonsäureanhydrid und Carbonsäuren hergestellt und isoliert werden und dann in Verfahrensschritt b) eingesetzt werden. Ebenso kann aber der N-Carbonsäuremethylphthalimidester in situ beispielsweise aus N-Hydroxymethylphthalimid und Carbonsäureanhydriden oder Carbonsäuren oder Gemischen aus Carbonsäureanhydriden und Carbonsäuren, gegebenenfalls in Gegenwart einer weiteren Protonensäure, hergestellt werden und ohne weitere Isolierung in Verfahrensschritt b) eingesetzt werden. Ebenfalls ist es möglich, dass die Protonensäure auch schon selbst eine Carbonsäure darstellen könnte und auf die Zugabe einer weiteren Protonensäure verzichtet werden kann, oder die Carbonsäure gegebenenfalls mit einer katalytischen Menge einer anderen starken Protonensäure vermischt wird und zur katalytischen Veresterung des N-Hydroxymethylphthalimids mit dem Carbonsäureanhydrid oder/und der Carbonsäure zum N-Carbonsäuremethylphthalimidester dient.

Als Protonensäuren können zur Herstellung des N-Carbonsäuremethylphthalimidesters beispielsweise anorganische oder organische Protonensäuren eingesetzt werden. Als anorganische Protonensäuren werden zur Herstellung des N-Carbonsäuremethylphthalimidesters beispielsweise Salzsäure, Schwefelsäure, Oleum, Salpetersäure, salpetrige Säure, schwefelige Säure oder Phosphorsäure eingesetzt. Als organische Protonensäuren zur Herstellung des N-Carbonsäuremethylphthalimidesters können z.B. Essigsäure, Propionsäure, Oxalsäure oder Ameisensäure eingesetzt werden. Bevorzugt werden anorganische Protonensäuren zur Herstellung des N-Carbonsäuremethylphthalimidesters eingesetzt. Besonders bevorzugt werden als Protonensäuren zur Herstellung des N-Carbonsäuremethylphthalimidesters Schwefelsäure, Salzsäure oder Oleum eingesetzt. Noch weiter bevorzugt wird als Protonensäure für die Herstellung von N-Carbonsäuremethylphthalimidester Schwefelsäure eingesetzt.

Bevorzugt wird N-Hydroxymethylphthalimid mit Carbonsäureanhydriden oder Gemischen aus Carbonsäureanhydriden und Carbonsäuren in Gegenwart einer Protonensäure zum N-Carbonsäuremethylphthalimidester umgesetzt.

Verfahrensschritt b) kann in unterschiedlicher Art und Weise durchgeführt werden. Der N-Carbonsäuremethylphthalimidester kann isoliert und dann z.B. mit dem Perlpolymerisat in Kontakt gebracht werden. Genauso gut könnte der N-Carbonsäuremethylphthalimidester auch in situ erzeugt und eingesetzt werden. Als Katalysator zur Kopplung des N-Carbonsäuremethylphthalimidesters mit dem Perlpolymerisat werden Friedel-Crafts Katalysatoren eingesetzt. Bevorzugt wird als Friedel-Crafts Katalysator Schwefelsäure eingesetzt. Besonders bevorzugt wird Schwefelsäure in einem Gemisch mit Eisen(III)chlorid eingesetzt. Nachdem die Reaktion in Verfahrensschritt b) beendet wurde, erfolgt die Aufarbeitung mit Hilfe bekannter Verfahren. In der Regel wird nach Abschluss der Reaktion eine wässrige Lösung zur Neutralisation eingetragen und das phthalamidomethylierte Perlpolymerisat danach abfiltriert. Die Aufarbeitung kann aber auch anders erfolgen.

Verfahrensschritt b) kann aber ebenfalls auch so durchgeführt werden, dass Phthalimid mit gasförmigen Formaldehyd in Gegenwart des Perlpolymerisates und in Gegenwart des Carbonsäureanhydrids oder der Carbonsäuren oder der Gemische aus Carbonsäureanhydriden und der Carbonsäuren und des Friedel-Crafts Katalysators direkt, in einer Eintopfreaktion, zum phthalimidomethylierten Perlpolymerisat umgesetzt wird. Auch hierbei wird intermediär der N-Carbonsäuremethylphthalimidester gebildet. Nachdem die Reaktion beendet wurde, erfolgt die Aufarbeitung mit Hilfe bekannter Verfahren. In der Regel wird nach Abschluss der Reaktion eine wässrige Salzlösung zur Neutralisation eingetragen und das Harz danach abfiltriert. Die Aufarbeitung kann aber auch anders erfolgen.

Bevorzugt erfolgt Verfahrensschritt b) so, dass der N-Carbonsäuremethylphthalimidester separat hergestellt wird und dann in Gegenwart des Friedels-Crafts Katalysators, des Carbonsäureanhydrids oder der Carbonsäuren oder der Gemische aus Carbonsäureanhydriden und der Carbonsäuren, mit dem Perlpolymerisat zum phthalamidomethylierten Perlpolymerisates umgesetzt wird. Bevorzugt wird dazu zunächst das N-Hydroxymethylphthalimid in Gegenwart einer Protonensäure zum N-Carbonsäuremethylphthalimidester umgesetzt und ohne weitere Abtrennung der Reaktionslösung mit dem Perlpolymerisat in Kontakt gebracht. Bevorzugt wird dann die Mischung erwärmt. Bevorzugt wird dann Schwefelsäure, dosiert zugegeben. Danach wird bevorzugt das Eisen(III)chlorid hinzugegeben. Der Ansatz wird bevorzugt erneut erwärmt. Bevorzugt erfolgt die Aufarbeitung durch Zugabe von entsalztem Wasser und Filtration des phthalamidomethylierten Perlpolymerisates.

Die Menge an N-Carbonsäuremethylphthalimidester, die in Verfahrensschritt b) eingesetzt wird, beträgt im Allgemeinen 2 bis 20 mol N-Carbonsäuremethylphthalimidester pro Mol Friedel-Crafts Katalysator, kann aber auch kleiner oder größer sein. Bevorzugt werden 2 bis 5 mol N-Carbonsäuremethylphthalimidester pro Mol Friedel-Crafts Katalysator eingesetzt.

Die Menge an N-Carbonsäuremethylphthalimidester, die in Verfahrensschritt b) eingesetzt wird, beträgt im Allgemeinen $10^{-3}$ mol bis 1 mol N-Carbonsäuremethylphthalimidester pro Gramm Perlpolymerisat, kann aber auch größer oder kleiner sein. Bevorzugt werden $10^{-3}$ mol bis 0,03 mol N-Carbonsäuremethylphthalimidester pro Gramm Perlpolymerisat eingesetzt.

Die Menge an Carbonsäureanhydriden oder Carbonsäuren oder Gemischen aus Carbonsäureanhydriden und Carbonsäuren, die in Verfahrensschritt b) eingesetzt wird, beträgt im Allgemeinen 1 bis 20 Mol Carbonsäureanhydride oder Carbonsäuren oder Carbonsäureanhydride und Carbonsäuren pro Mol N-Carbonsäuremethylphthalimidester, kann aber auch kleiner oder größer sein. Bevorzugt werden 1 bis 10 mol Carbonsäureahydride oder Carbonsäure oder

Gemische aus Carbonsäureahydride und Carbonsäuren pro Mol N-Carbonsäuremethylphthalimidester eingesetzt. Besonders bevorzugt werden 1,6 bis 2,5 mol Carbonsäureanhydride oder Carbonsäuren oder Gemische aus Carbonsäureanhydriden und Carbonsäuren pro Mol N-Carbonsäuremethylphthalimidester eingesetzt.

Bevorzugt ist der Gehalt von Quellungsmitteln in Verfahrensschritt b) kleiner als 10 Gew.% bezogen auf die Gesamtmenge der eingesetzten Edukte, noch weiter bevorzugt ist der Gehalt an Quellungsmitteln kleiner als 5 Gew.% bezogen auf die Gesamtmenge der Edukte. Verfahrensschritt b) wird besonders bevorzugt ohne Zusatz von Quellungsmittel durchgeführt. Als übliche Quellungsmittel gelten organische Lösungsmittel wie z.B. Dichlormethan, Dichlorethan, insbesondere 1,2-Dichlorethan, Tetrachlorethan, Dichlorpropan, Pentachlorpropan, Dimethylformamid, Sulfolane, Nitropropane oder Nitrobenzol. Verfahrensschritt b.) wird in Abwesenheit von 1,2-Dichlorethan durchgeführt.

Vorzugsweise liegt die Temperatur bei der Verfahrensschritt b) durchgeführt wird zwischen 100 °C und 150 °C.

Bevorzugt liegen die in Verfahrensschritt b) eingesetzten Verbindungen N-Carbonsäuremethylphthalimidester, Perlpolymerisat, Carbonsäureanhydriden, Carbonsäuren und Friedels-Craft Katalysatoren zusammen in einer Menge größer als 90 Gew.% in der Reaktionsmischung bezogen auf die Gesamtmenge der Reaktionsmischung vor.

Besonders bevorzugt liegen die in Verfahrensschritt b) eingesetzten Verbindungen N-Carbonsäuremethylphthalimidester, Perlpolymerisat, Carbonsäureanhydriden, Carbonsäuren und Friedel-Crafts Katalysatoren zusammen in einer Menge größer als 95 Gew.% in der Reaktionsmischung bezogen auf die Gesamtmenge der Reaktionsmischung vor.

In Verfahrensschritt b) werden bevorzugt Carbonsäuren oder Carbonsäureanhydride eingesetzt. In Verfahrensschritt b) können auch Mischungen eingesetzt werden, die aus den Verbindungen der Formel (I), Perlpolymerisat, aliphatischen, gesättigten oder ungesättigten Carbonsäureanhydriden und Friedels-Craft Katalysatoren bestehen und ohne zusätzliche Zugabe von Carbonsäuren eingesetzt werden. In diesem Fall gilt ebenfalls, dass die Gesamtmenge der eingesetzten Verbindungen der Formel (I), Perlpolymerisat, aliphatischen, gesättigten oder ungesättigten Carbonsäureanhydriden und Friedel-Crafts Katalysatoren vorzugsweise größer 80 Gew.-%, besonders bevorzugt größer 90 Gew.-% und ganz besonders bevorzugt größer 95 Gew.-% in der Reaktionsmischung bezogen auf die Gesamtmenge der Reaktionsmischung vorliegt.

In Verfahrensschritt b) werden bevorzugt auch Mischungen eingesetzt, die aus den Verbindungen der Formel (I), Perlpolymerisat, aliphatischen, gesättigten oder ungesättigten Carbonsäuren und Friedels-Craft Katalysatoren bestehen. In diesem Fall gilt ebenfalls, dass die Gesamtmenge der eingesetzten Verbindungen der Formel (I), Perlpolymerisat, aliphatischen, gesättigten oder ungesättigten Carbonsäuren und Friedel-Crafts Katalysatoren vorzugsweise größer 80 Gew.-%, besonders bevorzugt größer 90 Gew.-% und ganz besonders bevorzugt größer 95 Gew.-% in der Reaktionsmischung bezogen auf die Gesamtmenge der Reaktionsmischung vorliegt.

In Verfahrensschritt c) erfolgt im Allgemeinen die Umsetzung des phthalimidomethylierten, Perlpolymerisates zu dem aminomethylierten Perlpolymerisat mit wässrigen oder alkoholischen Lösungen eines Alkalihydroxids, wie Natriumhydroxid oder Kaliumhydroxid. Zudem wird Verfahrensschritt c) im Allgemeinen bei Temperaturen zwischen 100°C und 250°C kann aber auch bei höheren oder niedrigeren Temperaturen durchgeführt werden. Vorzugsweise wird Verfahrensschritt c) bei Temperaturen zwischen 120 °C und 190°C durchgeführt. Bevorzugt erfolgt die Umsetzung des phthalimidomethylierten, Perlpolymerisates zu dem aminomethylierten Perlpolymerisat in Verfahrensschritt c) mit Alkali- oder Erdalkalihydroxiden oder Gemischen dieser Verbindungen, besonders bevorzugt mit Alkalihydroxiden, wie insbesondere Natriumhydroxid. Bevorzugt verläuft die Umsetzung in Verfahrensschritt c) in Gegenwart einer wässrigen oder alkoholischen Lösung eines Alkalihydroxides. Die Konzentration der Natronlauge liegt im Bereich von 10 bis 50 Gew.-%, vorzugsweise 20 bis 40 Gew.-%. Das dabei entstehende aminomethylierte Perlpolymerisat wird bevorzugt mit vollentsalztem Wasser alkalifrei gewaschen, kann aber auch mit anderen wässrigen Lösungen oder nicht entsalztem Wasser behandelt werden.

Das aminomethylierte Perlpolymerisat kann als Anionenaustauscher verwendet werden oder zu Chelatharzen weiter umgesetzt werden.

Die Umsetzung der im Verfahrensschritt c) erhaltenen aminomethylierten, Perlpolymerisate zu Chelatharzen erfolgt nach gängigen, dem Fachmann bekannten Verfahren.

Z.B. kann die Herstellung von Iminodiessigsäuregruppen enthaltenen Chelatharze durch Umsetzung des aminomethylgruppenhaltigen Perlpolymerisat aus Verfahrensschritt c) in wässriger Suspension mit Chloressigsäure oder ihren Derivaten erfolgen. Ebenso ist es möglich die in Verfahrensschritt c) erhaltenen aminomethylierten Perlpolymerisate in schwefelsaurer Suspension mit Formalin in Kombination mit P-H aciden (nach modifizierter Mannich Reaktion) Verbindungen zu Chelatharzen mit Phosphonsäuregruppen umzusetzen. Mit Hilfe des erfindungsgemäßen Verfahrens können aminomethylierte Perlpolymerisate unter hohen Ausbeuten, bezogen auf die Menge an eingeführten Aminomethylgruppen, hergestellt werden. Ein weiterer Vorteil des Verfahrens besteht darin, dass auf den Zusatz von chlorierten organischen Lösungsmitteln bzw. Quellungsmitteln weitestgehend verzichtet werden kann. Es kann sogar vollständig auf chlorierte organische Lösungsmittel bzw. Quellungsmittel im Verfahrensschritt b.) verzichtet werden.

Die erfindungsgemäß hergestellten aminomethylierten Perlpolymerisate können als schwach basische Anionenaustauscher eingesetzt werden.

**Bestimmung der Menge an basischen Aminomethylgruppen im aminomethylierten Perlpolymerisat**

100 ml des aminomethylierten Perlpolymerisates werden auf dem Stampfvolumeter eingerüttelt und anschließend mit voll entsalztem Wasser in eine Glassäule gespült. In 1 Stunde und 40 Minuten werden 1000 ml 2 Gew- %ige wässrige Natronlauge überfiltriert.

Anschließend wird voll entsalztes Wasser überfiltriert bis 100 ml Eluat mit Phenolphthalein versetzt einen Verbrauch von höchstens 0,05 ml haben.

50 ml des Harzes werden in einem Becherglas mit 50 ml voll entsalztes Wasser und 100 ml 1 N Salzsäure versetzt.

Die Suspension wird 30 Minuten gerührt und anschließend in eine Glassäule gefüllt. Die Flüssigkeit wird abgelassen. Es werden weiter 100 ml 1 N Salzsäure über das Harz in 20 Minuten filtriert. Anschließend werden 200 ml Methanol überfiltriert. Alle Eluate werden gesammelt und vereinigt und mit 1 N Natronlauge gegen Methylporange titriet.

Die Menge an Aminomethylgruppen in 1 Liter aminomethyliertem Perlpolymerisat errechnet sich nach folgender Formel :

(200 V)*20 = mol Aminomethylgruppen pro Liter aminomethyliertes Perlpolymerisat.

**Beispiele**

**Beispiel 1**

1.1 Herstellung des heterodispersen, makroporösen Perlpolymerisates auf der Basis von Styrol, Divinylbenzol und Ethylstyrol

**Ein solches heterodisperses Perlpolymerisat wird in Beispiel 5 des US Patentes 3989650 eingesetzt.**

Bei Raumtemperatur werden im Reaktor 1112 ml voll entsalztes Wasser vorgelegt. Dazu werden 72 ml einer 2 gew.-%igen wässrigen Walocellösung dosiert. Walocel ist eine Hydroxyethylmethylcellulose. Diese Lösung wird in der Weise hergestellt, dass der Feststoff Hydroxyethylmethylcellulose in vorgelegtes Wasser unter Rühren eingetragen wird und dann weitere 4 Stunden gerührt wird. Nach Dosierung der wässrigen Walocellösung wird weitere 30 Minuten gerührt. Anschließend werden 7,5 Gramm Dinatriumhydrogenphosphat *12 $H_2O$ dosiert. Es wird weitere 30 Minuten gerührt.

Bei stehendem Rührer dosiert man die organische Phase bestehend aus 865,1 Gramm Styrol, 94,9 Gramm Divinylbenzol 80,95 gew.-%ig, 576 Gramm Isododekan und 7,68 Gramm Dibenzoylperoxid 75 gew.-%ig zu. Die Lösung war zuvor separat hergestellt worden.

Die o.g. Mischung wird unter Rühren durch Temperaturerhöhung nach einem Temperaturprogramm bei 25°C beginnend und bei 95°C endend auspolymerisiert.

Die Mischung wird abgekühlt, die Suspension wird auf ein Sieb gegeben, mit vollentsalztem Wasser gewaschen und 48 Stunden im Laborvakuumschrank bei 80°C getrocknet.

Gewichtsausbeute bezogen auf die Gesamtmenge der eingesetzten Monomeren: 957,2 Gramm

1.2 Herstellung von N-Acetoxymethylphthalimid

945,8 Gramm Essigsäureanhydrid werden bei Raumtemperatur vorgelegt. Dazu werden 1025,8 Gramm N-Methylolphthalimid dosiert. dann werden 14,2 Gramm Monoschwefelsäure dosiert. Die Suspension wird auf 80 °C erhitzt. Eine Lösung entsteht, die 30 Minuten bei 80°C gerührt wird.

1.3 Herstellung eines phthalimidomethylierten heterodispersen, makroporösen Perlpolymerisates

Bei 80 °C werden in 2 Minuten 450 Gramm des heterodispersen Perlpolymerisates aus Beispiel 1.1 zu der Mischung aus 1.2 dosiert. Die Suspension wird auf 120°C erhitzt und weitere 2 Stunden bei dieser Temperatur gerührt. Dann wird die Mischung auf 60°C abgekühlt. Nun werden in 2 Stunden 115,9 Gramm Monoschwefelsäure dosiert. Dann werden in 5 Minuten 300,5 Gramm Eisen(III)chlorid dosiert. Es wird eine Stunde bei 60°C nachgerührt. Die Suspension wird auf 115°C erhitzt und weitere 3,5 Stunden bei dieser Temperatur gerührt.

Die Mischung wird auf 80°C abgekühlt. 1500 ml voll entsalztes Wasser werden dosiert. Es wird 2 Stunden bei 95°C gerührt. Dann wird die Mischung abgekühlt und auf ein Sieb gegeben. Das phthalimidomethylierte Perlpolymerisat wird mit Wasser gewaschen .

Volumenausbeute: 2320 ml
Trockengewicht: 0,4911 Gramm pro ml
Stickstoffgehalt : 5,6 Gew.-% bezogen auf die Gesamtmenge des phthalimidomethylierte Perlpolymerisates

1.4 Herstellung eines aminomethylgruppenhaltigen heterodispersen, makroporösen Perlpolymerisates

1380 Gramm voll entsalztes Wasser und 1190 Gramm 50 gew.-%ige wässrige Natronlauge werden bei Raumtemperatur vorgelegt.

Dazu werden 2296 ml phthalimidomethyliertes Perlpolymerisat aus 1.3 dosiert. Die Suspension wird im Autoklav unter Rühren in 2 Stunden auf 180°C erhitzt und weitere 8 Stunden bei dieser Temperatur gerührt. Nach dem Abkühlen wird die Suspension auf ein Sieb gegeben. Das erhaltene aminomethylierte Perlpolymerisat wird mit voll entsalztem Wasser gewaschen .
Volumenausbeute : 1640 ml
Trockengewicht : 0,3376 Gramm pro ml
HCl - Zahl : 2,65 mol/ Liter Harz

## Beispiel 2

2.1 Herstellung des monodispersen, makroporösen Perlpolymerisates auf der Basis von Styrol, Divinylbenzol und Ethylstyrol

In einem 10 l Glasreaktor werden 3000 g entionisiertes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew. % Isododekan (techn. Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 μm-Sieb gewaschen und anschließend im Vakuum bei 80°C getrocknet. Man erhält 1893 g eines kugelförmigen Polymerisates.

2.2 Herstellung eines phthalimidomethylierten heterodispersen, makroporösen Perlpolymerisates

598 g Essigsäure, 441 g Acetoxymethylolphthalimd und 157 g Perlpolymerisat aus Beispiel 2.1 werden vorgelegt, auf 60°C erwämt und 1 h bei dieser Temperatur gerührt. Anschließend werden 143,1 g $FeCl_3$ zugegeben und 0,5 h gerührt. Danach wird die Temperatur auf 110°C erhöht und 10 h bei dieser Temperatur gerührt. Es wird auf 60°C abgekühlt, 360 g Essigsäure zugegeben und auf ein Sieb gegeben. Es wird ein weiteres Mal mit 360 g Essigsäure bei 60°C gewaschen, auf ein Sieb gegeben und mit voll entsalztem Wasser gewaschen.
Volumenausbeute: 1010 ml
Stickstoffgehalt: 5,9 %

2.2 Herstellung eines aminomethylgruppenhaltigen heterodispersen, makroporösen Perlpolymerisates

988 ml phthaliminomethyliertes Perlpolymerisat werden analog Beispiel 1.4 verseift.
Volumenausbeute: 720 ml
HCl-Zahl: 2,27 mol/l
Aminomethyliertes Harz - Basenmenge / Gramm Perlpolymerisat : 10,4

## Zusammenfassung der Ergebnisse

| Kenngröße | In Gegenwart eines Quellungsmittels (1,2 Dichlorethan) gemäß US 3989650 Beispiel 5 | ohne Quellungsmittel |
|---|---|---|
| Ausbeute aminomethyliertes Harz in ml pro Gramm Perl polymerisat | 3,6 | 3,68 |
| Aminomethyliertes Harz - HCl Zahl in mol/l | 2,4 | 2,65 |
| Aminomethyliertes Harz - Basenmenge / Gramm Perlpolymerisat | 8,64 | 9,76 |
| Umsetzungsgrad des eingesetzten Phthalimids zu aminomethylierten Gruppen in % | 64,8 | 75,8 |

Das beanspruchte Verfahren erlaubt daher ohne Einsatz von Quellungsmitteln höhere Ausbeuten an aminomethylierten Perlpolymerisat zu erhalten, als aus der US3989650 bekannt ist.

## Patentansprüche

1. Verfahren zur Herstellung von aminomethylierten Perlpolymerisaten, **dadurch gekennzeichnet, dass**

   a) Monomertröpfchen aus einem Gemisch enthaltend mindestens eine monovinylaromatische Verbindung, mindestens eine polyvinylaromatische Verbindung, mindestens einen Initiator zu einem Perlpolymerisat umgesetzt werden und
   b) das Perlpolymerisat aus Schritt a) mit N-Carbonsäuremethylphthalimidester
   in Gegenwart von aliphatischen, gesättigten oder ungesättigten Carbonsäureanhydriden oder Carbonsäuren oder in Gegenwart von Gemischen von aliphatischen, gesättigten oder ungesättigten Carbonsäureanhydride und zumindest einer aliphatischen, gesättigten oder ungesättigten Carbonsäure und
   in Abwesenheit von 1,2-Dichlorethan und
   in Gegenwart von zumindest einem Friedel-Crafts Katalysator
   zu einem phthalimidomethyliertem Perlpolymerisat umgesetzt wird und die Menge der eingesetzten Verbindungen:
   N-Carbonsäuremethylphthalimidester, Perlpolymerisat, aliphatischen, gesättigten oder ungesättigten Carbonsäureanhydride oder Carbonsäuren oder deren Gemische und Friedel-Crafts Katalysatoren zusammen in der Reaktionsmischung größer sind als 80 Gew.-%, bezogen auf die Gesamtmenge der Reaktionsmischung und
   c) das pthhalimidomethylierte Perlpolymerisat zu einem aminomethylierten Perlpolymerisat hydrolisiert wird.

2. Verfahren gemäß Anspruch 1, **dadurch gekennzeichnet, dass** in Verfahrensschritt a) als monovinylaromatische Verbindung Styrol, $\alpha$-Methylstyrol, Vinyltoluol, Ethylstyrol, t-Butylstyrol, Chlorstyrol, Bromstyrol, Chlormethylstyrol oder Vinylnaphthalin oder Mischungen dieser Verbindungen eingesetzt werden.

3. Verfahren gemäß Anspruch 1 oder 2, **dadurch gekennzeichnet, dass** in Verfahrensschritt a) als polyvinylaromatische Verbindung Divinylbenzol, Divinyltoluol oder Trivinylbenzol oder Mischungen dieser Verbindungen eingesetzt werden.

4. Verfahren gemäß mindestens einem der Ansprüche 1 bis 3, **dadurch gekennzeichnet, dass** als eine monovinylaromatische Verbindung Styrol und als polyvinylaromatische Verbindung Divinylbenzol eingesetzt werden.

5. Verfahren gemäß mindestens einem der Ansprüche 1 bis 4, **dadurch gekennzeichnet, dass** in Schritt b) N-Acetoxymethylphthalimid eingesetzt wird.

6. Verfahren gemäß mindestens einem der Ansprüche 1 bis 5, **dadurch gekennzeichnet, dass** als Friedel-Crafts Katalysatoren in Schritt b) ein Gemisch aus Eisen(III)chlorid und Schwefelsäure eingesetzt wird.

7. Verfahren gemäß mindestens einem der Ansprüche 1 bis 6, **dadurch gekennzeichnet, dass** 2 bis 5 mol N-Carbonsäuremethylphthalimidester pro Mol Friedel-Crafts Katalysator in Verfahrensschritt b) eingesetzt werden.

**8.** Verfahren gemäß mindestens einem der Ansprüche 1 bis 7, **dadurch gekennzeichnet, dass** $10^{-3}$ mol bis 0,03 mol N-Carbonsäuremethylphthalimidester pro Gramm Perlpolymerisat in Verfahrensschritt b) eingesetzt werden.

**9.** Verfahren gemäß mindestens einem der Ansprüche 1 bis 8, **dadurch gekennzeichnet, dass** N-Carbonsäuremethylphthalimidester in einer Menge von 1,6 bis 2,5 mol pro Mol Carbonsäureanhydride oder Carbonsäuren in Verfahrensschritt b) eingesetzt werden.

**10.** Verfahren gemäß mindestens einem der Ansprüche 1 bis 9, **dadurch gekennzeichnet, dass** in Schritt b) als Carbonsäureanhydride und Carbonsäuren ein Gemisch aus Essigsäureanhydrid und Essigsäure eingesetzt wird.

**11.** Verfahren gemäß Anspruch 10, **dadurch gekennzeichnet, dass** das Verhältnis Essigsäureanhydrid zu Essigsäure zwischen 3 : 1 bis 10 : 1 liegt.

**12.** Verfahren gemäß mindestens einem der Ansprüche 1 bis 11, **dadurch gekennzeichnet, dass** in Verfahrensschritt b) die eingesetzten Mengen der Verbindungen N-Carbonsäuremethylphthalimidester, Perlpolymerisat, Carbonsäureanhydriden oder Carbonsäuren oder deren Gemische, Friedel-Crafts Katalysatoren zusammen in einer Menge größer als 95 Gew.-% in der Reaktionsmischung bezogen auf die Gesamtmenge der Reaktionsmischung eingesetzt werden.

**13.** Verfahren gemäß mindestens einem der Ansprüche 1 bis 12, **dadurch gekennzeichnet, dass** Verfahrensschritt c) mit wässrigen oder alkoholischen Lösungen eines Alkalihydroxids bei Temperaturen zwischen 100°C und 250°C durchgeführt wird.

**14.** Verfahren gemäß mindestens einem der Ansprüche 1 bis 13, **dadurch gekennzeichnet**, das in Schritt a) ein Porogen eingesetzt wird.

**15.** Verfahren gemäß mindestens einem der Ansprüche 1 bis 14, **dadurch gekennzeichnet, dass** als Carbonsäure in Verfahrensschritt b.) Essigsäure eingesetzt wird.

## Claims

**1.** Process for preparing aminomethylated bead polymers, **characterized in that**

a) monomer droplets composed of a mixture comprising at least one monovinylaromatic compound, at least one polyvinylaromatic compound and at least one initiator are converted to a bead polymer and
b) the bead polymer from step a) is reacted with N-carboxymethylphthalimide
in the presence of aliphatic saturated or unsaturated carboxylic anhydrides or carboxylic acids or in the presence of mixtures of aliphatic saturated or unsaturated carboxylic anhydrides and at least one aliphatic saturated or unsaturated carboxylic acid,
in the absence of 1,2-dichloroethane and
in the presence of at least one Friedel-Crafts catalyst,
to give a phthalimidomethylated bead polymer, and the amount of the compounds used:
N-carboxymethylphthalimide, bead polymer, aliphatic, saturated or unsaturated carboxylic anhydrides or carboxylic acids or mixtures thereof and Friedel-Crafts catalysts collectively in the reaction mixture is greater than 80% by weight, based on the total amount of the reaction mixture, and
c) the phthalimidomethylated bead polymer is hydrolysed to give an aminomethylated bead polymer.

**2.** Process according to Claim 1, **characterized in that**, in process step a), monovinylaromatic compounds used are styrene, $\alpha$-methylstyrene, vinyltoluene, ethylstyrene, t-butylstyrene, chlorostyrene, bromostyrene, chloromethylstyrene or vinylnaphthalene or mixtures of these compounds.

**3.** Process according to Claim 1 or 2, **characterized in that**, in process step a), polyvinylaromatic compounds used are divinylbenzene, divinyltoluene or trivinylbenzene or mixtures of these compounds.

**4.** Process according to at least one of Claims 1 to 3, **characterized in that** a monovinylaromatic compound used is styrene and a polyvinylaromatic compound used is divinylbenzene.

5. Process according to at least one of Claims 1 to 4, **characterized in that** N-acetoxymethylphthalimide is used in step b).

6. Process according to at least one of Claims 1 to 5, **characterized in that** the Friedel-Crafts catalysts used in step b) are a mixture of iron(III) chloride and sulfuric acid.

7. Process according to at least one of Claims 1 to 6, **characterized in that** 2 to 5 mol of N-carboxymethylphthalimide is used per mole of Friedel-Crafts catalyst in process step b).

8. Process according to at least one of Claims 1 to 7, **characterized in that** $10^{-3}$ mol to 0.03 mol of N-carboxymethylphthalimide is used per gram of bead polymer in process step b).

9. Process according to at least one of Claims 1 to 8, **characterized in that** N-carboxymethylphthalimides are used in process step b) in an amount of 1.6 to 2.5 mol per mole of carboxylic anhydrides or carboxylic acids.

10. Process according to at least one of Claims 1 to 9, **characterized in that** the carboxylic anhydrides and carboxylic acids used in step b) are a mixture of acetic anhydride and acetic acid.

11. Process according to Claim 10, **characterized in that** the ratio of acetic anhydride to acetic acid is between 3:1 and 10:1.

12. Process according to at least one of Claims 1 to 11, **characterized in that**, in process step b), the N-carboxymethylphthalimide compounds, the bead polymer, the carboxylic anhydrides or carboxylic acids or mixtures thereof and the Friedel-Crafts catalysts are used collectively in an amount greater than 95% by weight in the reaction mixture, based on the total amount of the reaction mixture.

13. Process according to at least one of Claims 1 to 12, **characterized in that** process step c) is conducted with aqueous or alcoholic solutions of an alkali metal hydroxide at temperatures between 100°C and 250°C.

14. Process according to at least one of Claims 1 to 13, **characterized in that** a porogen is used in step a).

15. Process according to at least one of Claims 1 to 14, **characterized in that** the carboxylic acid used in process step b.) is acetic acid.

## Revendications

1. Procédé de fabrication de polymères en perles aminométhylés, **caractérisé en ce que**

   a) des gouttelettes de monomères constituées par un mélange contenant au moins un composé monovinylaromatique, au moins un composé polyvinylaromatique, au moins un initiateur sont transformées en un polymère en perles, et
   b) le polymère en perles de l'étape a) est mis en réaction avec de l'éther N-acide carboxylique-méthylphtalimide, en présence d'anhydrides d'acides carboxyliques ou d'acides carboxyliques aliphatiques, saturés ou insaturés, ou en présence de mélanges d'anhydrides d'acides carboxyliques aliphatiques, saturés ou insaturés et d'au moins un acide carboxylique aliphatique, saturé ou insaturé, et
   en l'absence de 1,2-dichloroéthane et
   en présence d'au moins un catalyseur de Friedel-Crafts,
   pour former un polymère en perles phtalimidométhylé, et les quantités des composés utilisés :
   ester N-acide carboxylique-méthylphtalimide, polymère en perles, anhydrides d'acides carboxyliques ou acides carboxyliques aliphatiques, saturés ou insaturés, ou leurs mélanges, et catalyseurs de Friedel-Crafts ensemble dans le mélange réactionnel sont supérieures à 80 % en poids par rapport à la quantité totale du mélange réactionnel, et
   c) le polymère en perles phtalimidométhylé est hydrolysé en un polymère en perles aminométhylé.

2. Procédé selon la revendication 1, **caractérisé en ce que**, dans l'étape de procédé a), du styrène, de l'a-méthylstyrène, du vinyltoluène, de l'éthylstyrène, du t-butylstyrène, du chlorostyrène, du bromostyrène, du chlorométhylstyrène ou de la vinylnaphtaline ou des mélanges de ces composés sont utilisés en tant que composé monovinylaromatique.

3. Procédé selon la revendication 1 ou 2, **caractérisé en ce que**, dans l'étape de procédé a), du divinylbenzène, du divinyltoluène ou du trivinylbenzène ou des mélanges de ces composés sont utilisés en tant que composé polyvinylaromatique.

4. Procédé selon au moins l'une quelconque des revendications 1 à 3, **caractérisé en ce que** du styrène est utilisé en tant que composé monovinylaromatique et du divinylbenzène est utilisé en tant que composé polyvinylaromatique.

5. Procédé selon au moins l'une quelconque des revendications 1 à 4, **caractérisé en ce que** du N-acétoxyméthylphtalimide est utilisé dans l'étape b).

6. Procédé selon au moins l'une quelconque des revendications 1 à 5, **caractérisé en ce qu'**un mélange de chlorure de fer (III) et d'acide sulfurique est utilisé en tant que catalyseur de Friedel-Crafts dans l'étape b).

7. Procédé selon au moins l'une quelconque des revendications 1 à 6, **caractérisé en ce que** 2 à 5 moles d'ester N-acide carboxylique-méthylphtalimide par mole de catalyseur de Friedel-Crafts sont utilisées dans l'étape de procédé b).

8. Procédé selon au moins l'une quelconque des revendications 1 à 7, **caractérisé en ce que** $10^{-3}$ mole à 0,03 mole d'ester N-acide carboxylique-méthylphtalimide est utilisée par gramme de polymère en perles dans l'étape de procédé b).

9. Procédé selon au moins l'une quelconque des revendications 1 à 8, **caractérisé en ce que** l'ester N-acide carboxylique-méthylphtalimide est utilisé en une quantité de 1,6 à 2,5 moles par mole d'anhydrides d'acides carboxyliques ou d'acides carboxyliques dans l'étape de procédé b).

10. Procédé selon au moins l'une quelconque des revendications 1 à 9, **caractérisé en ce que**, dans l'étape b), un mélange d'anhydride d'acide acétique et d'acide acétique est utilisé en tant qu'anhydrides d'acides carboxyliques et acides carboxyliques.

11. Procédé selon la revendication 10, **caractérisé en ce que** le rapport entre l'anhydride d'acide acétique et l'acide acétique est compris entre 3:1 et 10:1.

12. Procédé selon au moins l'une quelconque des revendications 1 à 11, **caractérisé en ce que**, dans l'étape de procédé b), les quantités utilisées des composés ester N-acide carboxylique-méthylphtalimide, polymère en perles, anhydrides d'acides carboxyliques ou acides carboxyliques ou leurs mélanges, catalyseurs de Friedel-Crafts sont utilisées ensemble en une quantité supérieure à 95 % en poids dans le mélange réactionnel par rapport à la quantité totale du mélange réactionnel.

13. Procédé selon au moins l'une quelconque des revendications 1 à 12, **caractérisé en ce que** l'étape de procédé c) est réalisée avec des solutions aqueuses ou alcooliques d'un hydroxyde alcalin à des températures comprises entre 100 °C et 250 °C.

14. Procédé selon au moins l'une quelconque des revendications 1 à 13, **caractérisé en ce qu'**un porogène est utilisé dans l'étape a).

15. Procédé selon au moins l'une quelconque des revendications 1 à 14, **caractérisé en ce que** de l'acide acétique est utilisé en tant qu'acide carboxylique dans l'étape de procédé b).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3733033 A
- US 7053129 B
- US 3925264 A
- US 3989650 A
- US 2006199892 A
- US 4382124 A
- EP 0046535 A
- US 4444961 A
- US 4419245 A
- WO 9312167 A